# EUROPEAN PATENT APPLICATION

(11) **EP 4 520 463 A1**
(43) Date of publication of application: **12.03.2025**
(21) Application number: 24197393.2
(22) Date of filing: 29.08.2024
(51) Int. Cl.: B22F 10/80, B33Y 50/00

(54) **BUILD DATA GENERATING DEVICE, THREE-DIMENSIONAL POWDER BED FUSION ADDITIVE MANUFACTURING SYSTEM, AND CUMULATIVE ENERGY DENSITY DISTRIBUTION DISPLAY METHOD**

(30) Priority: 07.09.2023 JP 2023145511
(71) Applicant: Jeol Ltd., Akishima-shi, Tokyo 196-8558 (JP)
(72) Inventor: HISAKI, Taku, Tokyo, 196-8558 (JP)
(74) Representative: Boult Wade Tennant LLP

(57) **Abstract**

One aspect of the present invention is a build data generating device that generates build data (304) for controlling a three-dimensional powder bed fusion additive manufacturing (PBF-AM) apparatus (10) that manufactures an article by melting a cross-sectional shape of each layer by irradiation of a beam, the build data generating device including: a display control unit (305) that generates data indicating a distribution of an irradiation energy density accumulated in a target layer by beam scanning for the target layer based on the build data (304) and outputs the data to a display device (42).

## Description

### BACKGROUND

### Technical Field

The present invention relates to a build data generating device, a three-dimensional powder bed fusion additive manufacturing (PBF-AM) system, and a cumulative energy density distribution display method.

### Related Art

As one of additive manufacturing methods for manufacturing an article, a powder bed fusion method is known. The powder bed fusion method is a manufacturing method in which a surface (hereinafter, also referred to as a "manufactured surface") of a powder layer formed by spreading powder with a predetermined thickness is selectively irradiated with a laser or a charged particle beam to melt and solidify a portion having a cross-sectional shape of an article to be manufactured. In the powder bed fusion method, a build plate is sequentially lowered each time the powder of each layer is melted and solidified, and the powder layers are stacked one by one to manufacture an article (component or the like). A three-dimensional PBF-AM apparatus employing a powder bed fusion method is disclosed in, for example, Patent Literature 1.

The operation of the three-dimensional PBF-AM apparatus is controlled according to an operation sequence program (hereinafter, also referred to as "build data") prepared in advance based on three-dimensional shape data. The three-dimensional shape data is data for specifying a three-dimensional shape of an article generated by three-dimensional CAD (Computer-Aided Design) or the like. The build data is generated by a computer device (hereinafter, referred to as a "build data generating device") in which a program generally called CAM (Computer Aided Manufacturing) software is incorporated using three-dimensional shape data of an article to be manufactured. The CAM software is executable on any computer.

As the processing of the CAM software in the build data generating device, first, the cross-sectional shape of each layer is cut out at an interval of a thickness corresponding to one layer from the input three-dimensional shape data. Next, manufacturing conditions for melting the cross-sectional shape of each layer are determined. The build data is obtained by applying the manufacturing condition to the cross-sectional shape of each layer and outputting the result to an electronic file.

### Citation List

### Patent Literature

Patent Literature 1: JP 2021 042465 A

### SUMMARY

The laser or charged particle beam (hereinafter, these are referred to as "energy beam") is controlled so as to have a certain size on the manufactured surface (in particular, in a case where the cross-section is approximated to be circular, the size is represented by a diameter (radius or diameter)). However, the energy density distribution in the cross section of the energy beam on the manufactured surface is generally not uniform. The reason why the energy density distribution of the beam cross section is non-uniform may be a complex reason. For example, in addition to a principle reason caused by a beam source such as an oscillator, a cathode, or an emitter, a lens existing between the beam source and the manufactured surface, an aberration when the beam passes through a diaphragm, a deflection device, or the like, an influence by a foreign substance existing in the vicinity of the beam path, and the like can be considered. One of the simplest approximation methods of the energy density distribution of the cross section of the beam on the manufactured surface is two-dimensional Gaussian distribution.

When such an energy beam in which the energy density distribution of the cross section is not essentially uniform is scanned and emitted to the manufactured surface at finite (described as finite in the sense that it is neither infinitesimal nor infinite) scanning point intervals or scanning line intervals, the cumulative energy density distribution in the manufactured surface by the irradiation of the energy beam is not uniform either.

When the microscopic cumulative energy density distribution falls within a range without excess or deficiency for favorably fusing the outermost surface of the powder bed in every minute region in a melting target region, it is considered that all the melting target regions are favorably melted, and as a result, a favorable and defect-free manufactured object is manufactured. Otherwise, in a minute region where the cumulative energy density is insufficient, the unmelted residue of the material powder occurs, and the possibility of manufacturing a defective manufactured object increases. Furthermore, in a minute region where the cumulative energy density is excessive, defects such as voids due to excessive melting and vaporization occur, and the possibility of manufacturing a defective manufactured object increases.

In view of the above situation, there has been a demand for a method of visually grasping, as a method (means) for verification and validation check of build data, the presence of a minute region in which the cumulative energy density on the manufactured surface is excessive or insufficient, which occurs when an energy beam having a non-uniform energy density distribution in a cross section is scanned and irradiated on the manufactured surface.

In order to solve the above problem, a build data generating device according to one aspect of the present invention is a build data generating device that generates build data for controlling a three-dimensional PBF-AM apparatus that manufactures an article by melting a cross-sectional shape of each layer by irradiation of a beam, and includes a display control unit that generates data indicating a distribution of an irradiation energy density accumulated in a target layer by beam scanning for the target layer based on the build data and outputs the data to a display device.

A three-dimensional PBF-AM system according to one aspect of the present invention is a three-dimensional PBF-AM system including: a three-dimensional PBF-AM apparatus that manufactures an article by melting a cross-sectional shape of each layer by irradiation of a beam; and a build data generating device that generates build data for controlling the three-dimensional PBF-AM apparatus, in which the build data generating device includes a display control unit that generates data indicating a distribution of an irradiation energy density accumulated in a target layer by beam scanning for the target layer based on the build data and outputs the data to a display device.

A cumulative energy density distribution display method according to one aspect of the present invention is a cumulative energy density distribution display method by a build data generating device that generates build data for controlling a three-dimensional PBF-AM apparatus that manufactures an article by melting a cross-sectional shape of each layer by irradiation of a beam, the cumulative energy density distribution display method including: processing of calculating an irradiation energy density accumulated in a target layer by beam scanning for the target layer based on the build data; and processing of generating data indicating a distribution of the irradiation energy density accumulated in the target layer and outputting the data to a display device.

According to at least one aspect of the present invention, it is possible to visually grasp the presence of a minute region in which the cumulative energy density is excessive or insufficient, which occurs when an energy beam having a non-uniform energy density distribution in a cross section is scanned on a manufactured surface.

### BRIEF DESCRIPTION OF DRAWINGS

FIG. 1 is a diagram schematically illustrating a configuration example of a three-dimensional PBF-AM system according to a first embodiment of the present invention;
FIG. 2 is a diagram illustrating a configuration example of a control system of a three-dimensional PBF-AM apparatus according to the first embodiment of the present invention;
FIG. 3 is a flowchart illustrating a procedure example of a processing operation of the three-dimensional PBF-AM apparatus according to the first embodiment of the present invention;
FIG. 4 is a block diagram illustrating a configuration example of a build data generating device according to the first embodiment of the present invention;
FIG. 5 is a block diagram illustrating a configuration example of a display control unit included in the build data generating device according to the first embodiment of the present invention;
FIG. 6 is a block diagram illustrating a hardware configuration example of a computer included in the build data generating device according to the first embodiment of the present invention;
FIG. 7 is a flowchart illustrating an example of a process of displaying a cumulative energy density distribution by the build data generating device according to the first embodiment of the present invention;
FIG. 8 is a diagram illustrating an example (part 1) visually representing a scanning path of an energy beam in a related art;
FIG. 9 is a diagram illustrating an example (part 2) visually representing the scanning path of the energy beam in the related art;
FIG. 10 is a diagram illustrating an example of a display screen representing the cumulative energy density distribution by the build data generating device according to the first embodiment of the present invention;
FIG. 11 is a flowchart illustrating an example of a process of displaying a cumulative energy density distribution by a build data generating device according to a second embodiment of the present invention;
FIG. 12 is a diagram illustrating an example of a display screen representing a cumulative energy density distribution including correction information (without correction) by the build data generating device according to the second embodiment of the present invention;
FIG. 13 is a diagram illustrating an example of a display screen representing a cumulative energy density distribution including correction information (with first correction) by the build data generating device according to the second embodiment of the present invention;
FIG. 14 is a diagram illustrating an example of a display screen representing a cumulative energy density distribution including correction information (with second correction) by the build data generating device according to the second embodiment of the present invention;
FIG. 15 is a diagram illustrating an example of a display screen representing a cumulative energy density distribution including correction information (with first and second corrections) by the build data generating device according to the second embodiment of the present invention;
FIG. 16 is a flowchart illustrating an example of a process of displaying a cumulative energy density distribution by a build data generating device according to a third embodiment of the present invention;
FIG. 17 is a diagram (part 1) illustrating an example of a display screen representing a cumulative energy density distribution in a middle stage of energy beam scanning by the build data generating device according to the third embodiment of the present invention; and
FIG. 18 is a diagram (part 2) illustrating an example of the display screen representing the cumulative energy density distribution in the middle stage of energy beam scanning by the build data generating device according to the third embodiment of the present invention.

### DETAILED DESCRIPTION

Hereinafter, examples of modes for carrying out the present invention (hereinafter, referred to as "embodiments") will be described with reference to the accompanying drawings. In the present specification and the accompanying drawings, the same components or similar components are denoted by the same reference numerals, and redundant description may be omitted or only description focusing on a difference may be performed. The number of each component may be singular or plural unless otherwise specified.

### <First Embodiment>

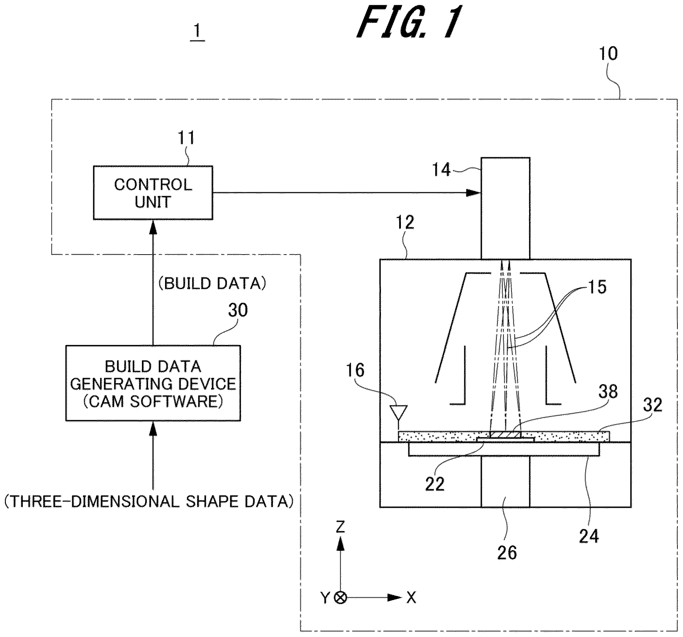

First, a three-dimensional PBF-AM system according to a first embodiment of the present invention will be described with reference to FIGS. 1 to 3.

FIG. 1 is a diagram schematically illustrating a configuration example of the three-dimensional PBF-AM system according to the first embodiment of the present invention.

In FIG. 1, the three-dimensional PBF-AM system 1 includes a three-dimensional PBF-AM apparatus 10 and a build data generating device 30.

### [Three-Dimensional PBF-AM Apparatus]

The three-dimensional PBF-AM apparatus 10 is shown in a schematic side view. In the following description, in order to clarify the shape, positional relationship, and the like of each part of the three-dimensional PBF-AM apparatus 10, the left-right direction in FIG. 1 is referred to as an X direction, the depth direction in FIG. 1 is referred to as a Y direction, and the vertical direction in FIG. 1 is referred to as a Z direction. The X direction, the Y direction, and the Z direction are directions orthogonal to each other. Further, the X direction and the Y direction are parallel to the horizontal direction, and the Z direction is parallel to the perpendicular direction.

As illustrated in FIG. 1, the three-dimensional PBF-AM apparatus 10 mainly includes a vacuum chamber 12, a beam irradiation device 14, a powder application device 16, a build plate 22, an inner base 24, and a plate moving device 26. The three-dimensional PBF-AM apparatus 10 manufactures an article (hereinafter, also referred to as a "manufactured object") by the above-described powder bed fusion method. In the present embodiment, a case where the beam with which the surface of a powder layer is irradiated is a charged particle beam, more specifically, an electron beam will be described as an example. However, the beam is not limited to the charged particle beam, and may be, for example, a laser beam. When a laser beam is employed, it is not necessary to vacuum the chamber.

The vacuum chamber 12 is a chamber for creating a vacuum state by evacuating the air in the chamber by a vacuum pump (not illustrated). The vacuum chamber 12 corresponds to a build chamber that forms a space for manufacturing a three-dimensional manufactured object 38.

The beam irradiation device 14 is a device that irradiates the surface of a powder layer, that is, a manufactured surface with an electron beam 15. The electron beam 15 is an example of the charged particle beam. The beam irradiation device 14 includes an electron gun that is a generation source of the electron beam 15, a focusing lens that focuses the electron beam 15 generated by the electron gun, and a deflection device that deflects the electron beam 15.

The electron beam 15 is focused by a magnetic field generated by a focusing coil constituting the focusing lens. The size of the electron beam 15 in the manufactured surface can be adjusted by the focusing lens. The deflection device is configured using a deflection coil, and deflects the electron beam 15 by a magnetic field generated by the deflection coil. The scanning of the electron beam 15 on the manufactured surface is achieved by the deflection device.

The powder application device 16 is a device that applies a metal powder 32, which is a raw material of the manufactured object 38, onto the build plate 22 to form the powder layer. The metal powder 32 is an example of a powder to be the raw material of the manufactured object 38. As an example, the powder application device 16 includes a hopper that is a chamber for storing the metal powder, a powder dropping device, and a squeegee (not illustrated). The powder dropping device is a device that drops powder stored in the hopper onto the inner base 24. The squeegee is an elongated member elongated in the Y direction. The squeegee horizontally moves on the build plate 22 from one end side toward the other end side of the inner base 24 to spread the metal powder 32. Thus, the powder layer is formed on the build plate 22. The squeegee is provided to be movable in the X direction in order to spread the metal powder 32 over the entire surface of the inner base 24.

The build plate 22 is a plate for forming the manufactured object 38 using the metal powder 32. The manufactured object 38 is layered and formed on the build plate 22. The build plate 22 is formed in a circular shape in plan view or a square shape in plan view.

The inner base 24 is provided to be movable in the vertical direction (Z direction) by being driven by the plate moving device 26. The build plate 22 moves in the vertical direction integrally with the inner base 24. The inner base 24 has a larger outer dimension than the build plate 22. For example, the inner base 24 moves in the vertical direction in a space below an opening formed in a central portion of the build table (not illustrated).

The plate moving device 26 is a device that moves the build plate 22 and the inner base 24 in the vertical direction. As an example, the plate moving device 26 includes a shaft and a drive mechanism unit. The shaft is connected to the lower surface of the inner base 24. The drive mechanism unit includes a motor and a power transmission mechanism (not illustrated), and drives the power transmission mechanism using the motor as a drive source to move the build plate 22 and the inner base 24 integrally with the shaft in the vertical direction.

The three-dimensional PBF-AM apparatus 10 illustrated in FIG. 1 schematically illustrates the principle of the powder bed fusion system, and is not limited to this example.

### [Build Data Generating Device]

The build data generating device 30 generates build data using three-dimensional shape data of an article generated by three-dimensional CAD or the like. The build data generated by the build data generating device 30 is recorded, for example, in a portable recording medium, and the build data is provided to the three-dimensional PBF-AM apparatus 10 using this recording medium. The provided build data is read by a control unit 11 of the three-dimensional PBF-AM apparatus 10. The control unit 11 controls the operation of the three-dimensional PBF-AM apparatus 10 based on the build data read from a recording medium. Thus, the three-dimensional PBF-AM apparatus 10 manufactures the article according to the build data generated by the build data generating device 30.

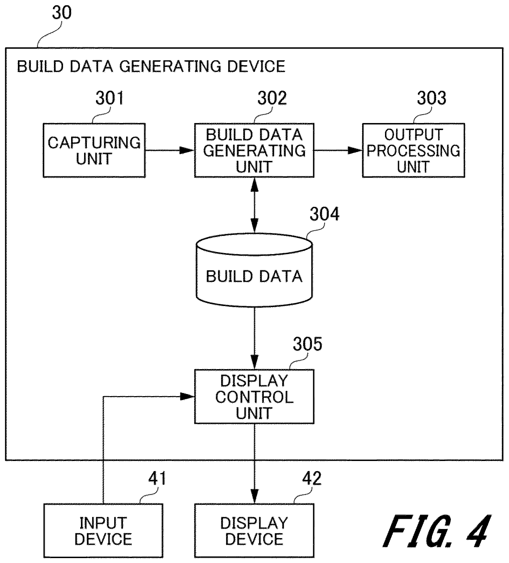

The method of providing the build data from the build data generating device 30 to the three-dimensional PBF-AM apparatus 10 is not limited to the above-described method using the portable recording medium. For example, the build data generated by the build data generating device 30 may be provided to the three-dimensional PBF-AM apparatus 10 via a cable or a network. Furthermore, the three-dimensional PBF-AM apparatus 10 may have a configuration having each function (see FIG. 4) of the build data generating device 30.

The build data generated by the build data generating device 30 includes build data for controlling the operation of the beam irradiation device 14, build data for controlling the powder application device 16, build data for controlling the plate moving device 26, and the like. However, in the present specification, the generation of build data for controlling the operation of the beam irradiation device 14 will be described, and the description regarding the generation of other build data will be omitted.

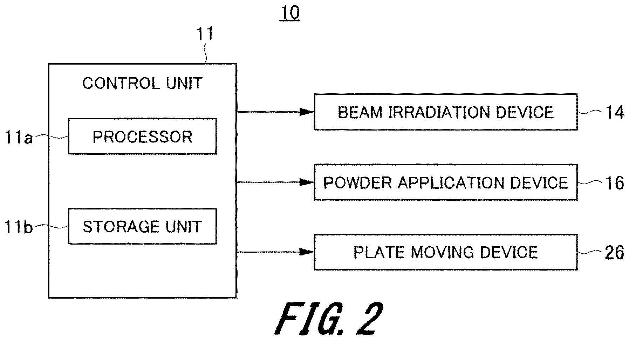

FIG. 2 is a diagram illustrating a configuration example of a control system of the three-dimensional PBF-AM apparatus 10 according to the first embodiment of the present invention.

In FIG. 2, the control unit 11 is configured by a computer including a processor 11a such as a central processing unit (CPU) and a storage unit 11b such as a read only memory (ROM), a random access memory (RAM), a hard disk drive (HDD), and a solid state drive (SSD). Then, the control unit 11 comprehensively controls the operation of the three-dimensional PBF-AM apparatus 10 by the processor reading a program written in the ROM in advance into the RAM and executing the program. Furthermore, the control unit 11 controls the operation of the entire three-dimensional PBF-AM apparatus 10 according to build data to be described later. The beam irradiation device 14, the powder application device 16, and the plate moving device 26 are connected to the control unit 11 as control targets.

The beam irradiation device 14 emits the electron beam 15 based on a control command given from the control unit 11. At that time, the control unit 11 controls the electron beam 15 via the electron gun, the focusing lens, and the deflection device (not illustrated). For example, the control unit 11 controls the beam current amount of the electron beam 15 via the beam irradiation device 14. In addition, the control unit 11 controls the spot size of the electron beam 15 via the focusing lens. The spot size of the electron beam 15 is the size of the electron beam 15 on the manufactured surface. In addition, the control unit 11 controls the deflection angle and the deflection speed of the electron beam 15 via the deflection device. The deflection angle of the electron beam 15 is a control parameter that determines the irradiation position of the electron beam 15. The deflection speed of the electron beam 15 is a control parameter that determines the scanning speed of the electron beam 15. The scanning speed of the electron beam 15 can be rephrased as a moving speed of the electron beam 15.

The plate moving device 26 moves the build plate 22 and the inner base 24 based on a control command given from the control unit 11. The powder application device 16 applies the metal powder 32 onto the build plate 22 based on a control command given from the control unit 11 to form the powder layer. The operations of the elements (hopper, powder dropping device, and squeegee) included in the powder application device 16 are controlled by the control unit 11.

### [Operation of Three-Dimensional PBF-AM Apparatus]

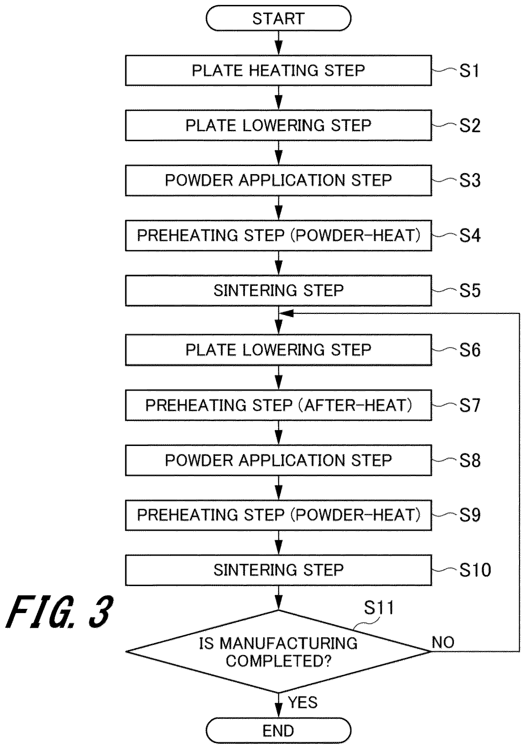

FIG. 3 is a flowchart illustrating a procedure example of a processing operation of the three-dimensional PBF-AM apparatus 10 according to the first embodiment of the present invention. The processing operation illustrated in this flowchart is performed under the control of the control unit 11.

In the state before starting the manufacturing, the periphery of the build plate 22 is covered with the metal powder 32 except for the upper surface of the build plate 22. Furthermore, the upper surface of the build plate 22 is arranged at substantially the same height as the upper surface of the metal powder 32 spread on the inner base 24.

### (Plate Heating Step)

First, the beam irradiation device 14 heats the build plate 22 by operating based on a control command given from the control unit 11 (step S1).

In step S1, the beam irradiation device 14 irradiates the build plate 22 with the electron beam 15. Thus, the build plate 22 is heated to a temperature at which the metal powder 32 is pre-sintered.

### (Plate Lowering Step)

Next, the plate moving device 26 lowers the build plate 22 by a predetermined amount by operating based on a control command given from the control unit 11 (step S2).

In step S2, the plate moving device 26 lowers the inner base 24 by a predetermined amount so that the upper surface of the build plate 22 is slightly lower than the reference position.

At this time, the build plate 22 is lowered by the predetermined amount together with the inner base 24. The predetermined amount (hereinafter, also referred to as "ΔZ") corresponds to a thickness of one layer when the manufactured object 38 is manufactured by layering.

### (Powder Application Step)

Next, the powder application device 16 operates based on a control command given from the control unit 11 to apply the metal powder 32 onto the build plate 22 to form the powder layer (step S3).

In step S3, the powder application device 16 drops the metal powder 32 onto the inner base 24, and then moves the squeegee in the X direction to spread the metal powder 32 on the build plate 22. At this time, the metal powder 32 is spread on the build plate 22 with a thickness corresponding to ΔZ. Thus, the powder layer is formed on the build plate 22. Further, the excess metal powder 32 is collected in the collection box (not illustrated).

### (Preheating Step)

Next, the beam irradiation device 14 operates based on a control command given from the control unit 11 to preheat the powder layer on the build plate 22 (step S4). In the preheating step S4, the powder layer is preheated in order to pre-sinter the metal powder 32. The preheating step S4 is performed before a sintering step S5 described later. As described above, the preheating step performed before the sintering step is also referred to as a powder-heat step. The powder layer includes an unsintered region where the unsintered metal powder 32 exists and a pre-sintered region where the pre-sintered metal powder 32 exists.

### (Sintering Step)

Next, the beam irradiation device 14 operates based on a control command given from the control unit 11 to sinter the metal powder 32 by melting and solidification (step S5).

In step S5, the metal powder 32 as a pre-sintered body is sintered by melting and solidifying the metal powder 32 pre-sintered as described above by irradiation with the electron beam 15. In step S5, the control unit 11 sets the cross-sectional shape of each layer cut out from the three-dimensional shape data of the target manufactured object 38 as a melting target region, and controls the beam irradiation device 14 according to the build data associated with the cross-sectional shape. As a result, in the metal powder 32 on the build plate 22, a melting target region represented by a two-dimensional cross-sectional shape is melted by irradiation with the electron beam 15. The metal powder 32 melted by the irradiation with the electron beam 15 is solidified after the electron beam 15 passes. Thus, the first layer of the manufactured object is formed.

### (Plate Lowering Step)

Next, the plate moving device 26 lowers the build plate 22 by a predetermined amount (ΔZ) by operating based on a control command given from the control unit 11 (step S6) .

In step S6, the plate moving device 26 lowers the build plate 22 and the inner base 24 by ΔZ.

### (First Preheating Step)

Subsequently, the beam irradiation device 14 operates based on a control command given from the control unit 11 to preheat the powder layer on the build plate 22 (step S7). In the first preheating step S7, as a preparation for spreading the metal powder 32 in the next layer, the powder layer that has completed the sintering step in the previous layer is preheated. As a result, the powder layer is heated to such an extent that the metal powder 32 of the next layer is heated by heat conduction from the current layer and is pre-sintered. The preheating step S7 may be performed after the sintering step S5 described above or may be performed after a sintering step S10 described later. As described above, the preheating step performed after the sintering step is also referred to as an after-heat step.

### (Powder Application Step)

Next, the powder application device 16 operates based on a control command given from the control unit 11 to apply the metal powder 32 onto the build plate 22 to form the powder layer (step S8).

In step S8, the powder application device 16 operates similarly to step S3 described above. Thus, on the build plate 22, the second layer of metal powder 32 is spread over the sintered body formed of the first layer of metal powder 32 to form the powder layer.

### (Second Preheating Step)

Next, the beam irradiation device 14 operates based on a control command given from the control unit 11 to preheat the metal powder 32 forming the second powder layer (step S9). The preheating step S9 is performed before the sintering step S10 described later. Therefore, the preheating step S9 is also referred to as a powder-heat step.

In step S9, the beam irradiation device 14 operates similarly to step S4 described above.

As a result, the metal powder 32 forming the second powder layer is pre-sintered.

### (Sintering Step)

Next, the beam irradiation device 14 operates based on a control command given from the control unit 11 to sinter the metal powder 32 forming the second powder layer by melting and solidification (step S10).

In step S10, the beam irradiation device 14 operates similarly to step S5 described above. Thus, the second layer of the manufactured object is formed.

Next, the control unit 11 checks whether or not the manufacturing of the target manufactured object 38 is completed (step S11). When it is determined that the manufacturing of the manufactured object 38 is not completed (NO determination), the control unit 11 returns to step S6 described above. As a result, the control unit 11 repeats the processes of steps S6 to S10 for each of the third and subsequent layers. When it is determined that the manufacturing of the manufactured object 38 is completed (YES determination), the series of processes is ended at that time.

By the three-dimensional powder bed fusion additive manufacturing (PBF-AM) process described above, the target manufactured object 38 is obtained.

### [Configuration of Build Data Generating Device]

Next, a configuration of the build data generating device according to the first embodiment of the present invention will be described with reference to FIG. 4.

FIG. 4 is a block diagram illustrating a configuration example of the build data generating device 30.

As illustrated in FIG. 4, the build data generating device 30 includes a capturing unit 301, a build data generating unit 302, an output processing unit 303, build data 304, and a display control unit 305. An input device 41 (an example of an input unit) and a display device 42 (an example of an output unit) are connected to the display control unit 305.

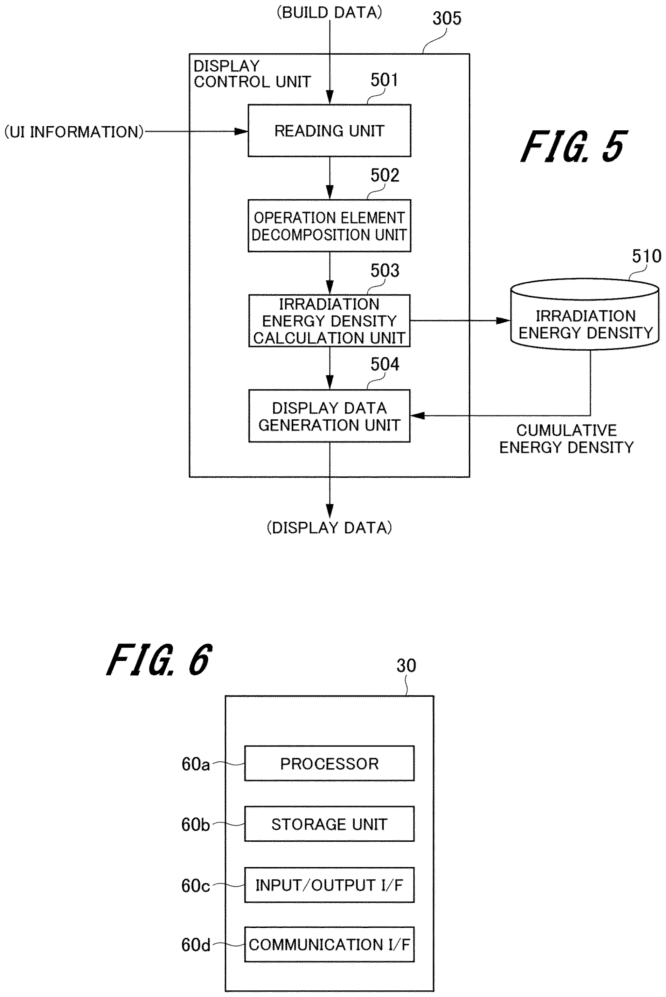

As illustrated in FIG. 6, the build data generating device 30 is configured by a computer including a processor 60a such as a CPU and a storage unit 60b such as a ROM, a RAM, an HDD, and an SSD. For example, a general-purpose personal computer (PC) can be used as the build data generating device 30. Each function of the build data generating device 30 is implemented by the processor reading a program written in advance in the ROM into the RAM and executing the program.

The build data generating device 30 includes an input/output I/F 60c and a communication I/F 60d.

The input/output I/F 60c performs input processing of user interface (UI) information input from the input device 41 (FIG. 4), and performs output processing of display data output to the display device 42 (FIG. 4).

The input device 41 is a keyboard, a mouse, or the like. Furthermore, the input device 41 may be a touch panel in which a touch sensor and a display panel are stacked.

The communication I/F 60d performs communication processing of transmitting and receiving information to and from the control unit 11 of the three-dimensional PBF-AM apparatus 10 and another information processing apparatus (not illustrated). The control unit 11 illustrated in FIG. 2 may also be considered to have functions similar to those of the input/output I/F 60c and the communication I/F 60d.

The description refers back to FIG. 4. The capturing unit 301 captures three-dimensional shape data input to the build data generating device 30 via the communication I/F 60d, and outputs the three-dimensional shape data to the build data generating unit 302.

The build data generating unit 302 cuts out the cross-sectional shape of each layer from the three-dimensional shape data captured by the capturing unit 301. This cross-sectional shape is a two-dimensional cross-sectional shape representing a shape of a region to be melted by irradiation with an energy beam (the electron beam 15 in the present specification), that is, a melting target region in each powder layer. Further, the cross-sectional shape cut out by the build data generating unit 302 is a shape represented by one or more closed lines. The number of cross-sectional shapes cut out from one powder layer may be plural.

Then, the build data generating unit 302 generates the build data 304 by applying the manufacturing condition to the cross-sectional shape, and stores the build data in the storage unit 60b (FIG. 6). This build data corresponds to build data (operation sequence program) for the control unit 11 to control the operation of the beam irradiation device 14 in the sintering steps S5 and S10 (FIG. 3).

The manufacturing condition includes a beam scanning condition and a beam irradiation condition. The beam scanning condition is a condition applied when the surface of the powder layer is scanned with the energy beam (the electron beam 15 in the present embodiment). The beam irradiation condition is a condition applied when the surface of the powder layer is irradiated with the energy beam (the electron beam 15 in the present embodiment). There are various beam scanning conditions, and there are also various beam irradiation conditions. Hereinafter, a specific example of the beam scanning conditions and a specific example of the beam irradiation conditions will be described.

The beam scanning conditions include a beam scanning method, a distance between adjacent scanning lines (interval between scanning lines), a scanning speed, and the like. In addition, the beam scanning method includes raster scanning, vector scanning, random scanning, and the like. The raster scanning is a method of generating parallel scanning lines and scanning a beam along the generated scanning lines. The raster scanning includes one-way raster scanning and reciprocating raster scanning. The vector scanning is a method in which annual ring-shaped scanning lines are generated in accordance with a contour line forming a cross-sectional shape, and a beam is scanned along the generated scanning lines. The random scanning is a method of randomly beam scanning a region having a cross-sectional shape. When the surface of the powder layer is scanned by the electron beam 15, the center of the spot of the electron beam 15 moves on the scanning line.

Meanwhile, the beam irradiation conditions include the current amount of the charged particle beam, the beam size in the manufactured surface, and the like. The current amount of the charged particle beam corresponds to the beam current amount. In the present embodiment, the electron beam 15 is used as the charged particle beam. Therefore, the current amount of the electron beam 15 corresponds to the current amount of the charged particle beam. The size (spot size) of the electron beam 15 on the manufactured surface corresponds to the beam size on the manufactured surface. When the beam with which the surface of the powder layer is irradiated is a laser beam, the beam irradiation conditions include the laser intensity, the beam size on the manufactured surface, and the like. The laser intensity corresponds to the intensity of the laser beam, that is, the beam intensity.

The intensity of the energy beam is defined as the energy (for example, W/cm²) of the energy beam with which a unit area is irradiated in a unit time. Since the energy density is the energy of the energy beam with which the unit area is irradiated for a certain length of time, the longer the irradiation time for the same region, the higher the energy density.

The manufacturing condition is set in consideration of the beam scanning method (vector scanning, raster scanning), the scanning line interval, the scanning speed, the type of energy beam, the irradiation energy (current amount of charged particle beam, intensity of laser beam), the beam size in the manufactured surface, and the like. Specifically, what kind of manufacturing condition is applied to the cross-sectional shape has been studied for each manufacturing company of the three-dimensional PBF-AM apparatus, and the outline will be described here and the detailed description will be omitted.

The output processing unit 303 outputs the build data 304 generated by the build data generating unit 302 to the electronic file. The build data 304 output to the electronic file is provided to the three-dimensional PBF-AM apparatus 10 by the above-described method (for example, a method using a portable recording medium). Furthermore, in a case where the article to be manufactured is, for example, manufactured by powder bed fusion additive manufacturing in 100 layers, build data 304 for 100 layers is provided to the three-dimensional PBF-AM apparatus 10. Then, the control unit 11 of the three-dimensional PBF-AM apparatus 10 sequentially controls the operation of the entire three-dimensional PBF-AM apparatus 10 according to the build data 304 provided from the build data generating device 30.

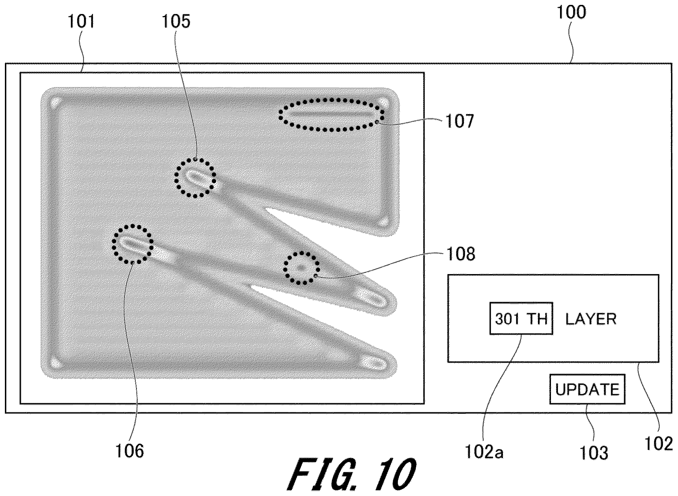

The display control unit 305 generates display data indicating the distribution of the irradiation energy density accumulated in each layer (hereinafter, referred to as "cumulative energy density distribution") by beam scanning for each layer based on the build data 304, and outputs the display data to the display device 42 via the input/output I/F 60c. The display device 42 displays the cumulative energy density distribution of the designated layer transmitted from the display control unit 305 on the display screen. The display control unit 305 receives the layer number (see FIG. 10) of the display target designated by the operator from the input device 41, generates the cumulative energy density distribution of the designated layer, and outputs the cumulative energy density distribution as display data. The display device 42 displays the cumulative energy density distribution of the layer designated by the user on the display screen according to the display data transmitted from the display control unit 305.

### [Configuration of Display Control Unit]

Next, a configuration of the display control unit 305 included in the build data generating device 30 according to the first embodiment of the present invention will be described with reference to FIG. 5.

FIG. 5 is a block diagram illustrating a configuration example of the display control unit 305 included in the build data generating device 30.

As illustrated in FIG. 5, the display control unit 305 includes a reading unit 501, an operation element decomposition unit 502, an irradiation energy density calculation unit 503, and a display data generation unit 504.

The reading unit 501 reads the build data 304 of a designated layer from the build data 304 (FIG. 4) of each layer stored in the storage unit 60b based on the UI information, and outputs the data to the operation element decomposition unit 502.

The operation element decomposition unit 502 decomposes the scanning of the energy beam in the designated layer into operation elements point by point or line by line with respect to the build data 304 of the target layer read by the reading unit 501. Whether to set the decomposition unit to one point or one line may be determined according to a unit of instruction to the deflection device of the three-dimensional PBF-AM apparatus 10. For example, when the deflection device is instructed to perform beam irradiation once, the decomposition unit is set to one point, and when the deflection device is instructed to perform beam irradiation a plurality of times (corresponding to one line) as one unit, the decomposition unit is set to one line. An example of one line is one side of a polygon having a cross-sectional shape.

The irradiation energy density calculation unit 503 calculates the energy density to be irradiated for each minute region corresponding to each of all display pixels at the designated display magnification with respect to each one of the operation elements decomposed by the operation element decomposition unit 502. The size of the minute region corresponding to each pixel of the manufactured surface varies depending on the display magnification. The display magnification may be set in advance, or the operator may designate any display magnification.

The energy density with which the minute region is irradiated is calculated in consideration of manufacturing conditions. For example, the manufacturing condition includes an energy density distribution of a beam cross section (beam spot in the manufactured surface), a scanning speed, a scanning point interval, and a beam scanning path. The scanning point interval is an interval (distance) of irradiation positions in continuous beam irradiation. From the scanning speed and the scanning point interval, it is possible to calculate the time during which the beam spot stayed in each minute region. When the stay time of the beam spot is known, the energy amount of the beam with which each minute region is irradiated can be determined.

Then, the irradiation energy density calculation unit 503 stores the irradiation energy density 510 calculated for the minute region corresponding to each pixel for each operation element of the planned beam scanning path in the storage unit 60b. The information on the irradiation energy density is stored in a scalar value storage region secured for each minute region corresponding to each pixel in the storage unit 60b so as to be added to the immediately preceding value. Therefore, in the minute region in which the plurality of beam spots in the minute region overlap, the irradiation energy density is integrated and stored. The integrated irradiation energy density corresponds to the cumulative energy density. The cumulative energy density for each minute region in the manufactured surface corresponds to the cumulative energy density distribution in the manufactured surface.

The display data generation unit 504 associates the cumulative energy density of the minute region corresponding to each pixel stored in the storage unit 60b with a gray scale, a hue, or an arbitrary color map, and generates cumulative energy density distribution data in the manufactured surface. A visualization method in which an image is applied by a continuous change in color tone according to the level of the value (cumulative energy density in the present invention) of each point or region is also called a heat map. Then, the display data generation unit 504 outputs the cumulative energy density distribution data to the display device 42 as display data, and graphically displays the cumulative energy density distribution on the manufactured surface on the display screen of the display device 42. The display screen is provided with a mechanism for displaying and designating the layer number (see FIG. 10).

### [Operation of Three-Dimensional PBF-AM Apparatus]

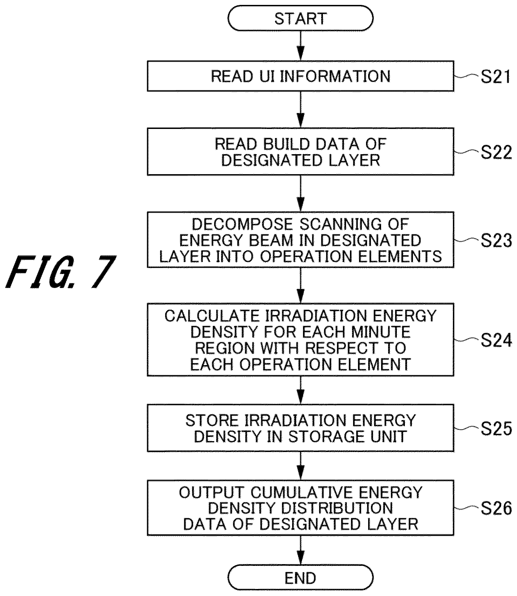

FIG. 7 is a flowchart illustrating an example of a process of displaying a cumulative energy density distribution by the build data generating device 30 according to the first embodiment of the present invention. The operation of this flowchart is realized by the processor 60a (FIG. 6) reading and executing a program written in the storage unit 60b. This flowchart starts processing when the operator presses an instruction button of "update" (see FIG. 10) on the display screen.

First, in the display control unit 305, the reading unit 501 reads an operation (UI information) by the operator from the input device 41 (step S21). As an example, the UI information includes a layer number for displaying the cumulative energy density distribution.

Subsequently, the reading unit 501 reads the build data 304 of the designated layer number from the build data 304 stored in the storage unit 60b (step S22).

Next, the operation element decomposition unit 502 decomposes the scanning of the energy beam in the designated layer into operation elements (step S23).

Next, the irradiation energy density calculation unit 503 calculates the irradiation energy density 510 for each minute region corresponding to each of the display pixels at the designated display magnification based on the manufacturing condition for all the operation elements (step S24).

Then, the irradiation energy density calculation unit 503 stores the irradiation energy density 510 of each minute region calculated for each operation element in the storage region secured for each minute region of the storage unit 60b (step S25). A scalar value of the irradiation energy density is stored in the storage region.

Next, the display data generation unit 504 generates cumulative energy density distribution data (display data) of the designated layer from the irradiation energy density 510 for each minute region of the designated layer stored in the storage unit 60b, and outputs the data to the display device 42 (step S26). As a result, the cumulative energy density distribution for the pixels to be displayed in the layer designated by the operator is graphically displayed on the display device 42.

The cumulative energy density distribution of the designated layer is graphically displayed by the operation of the build data generating device 30 (display control unit 305) described above.

### [Display Example of Energy Beam Scanning Path in Related Art]

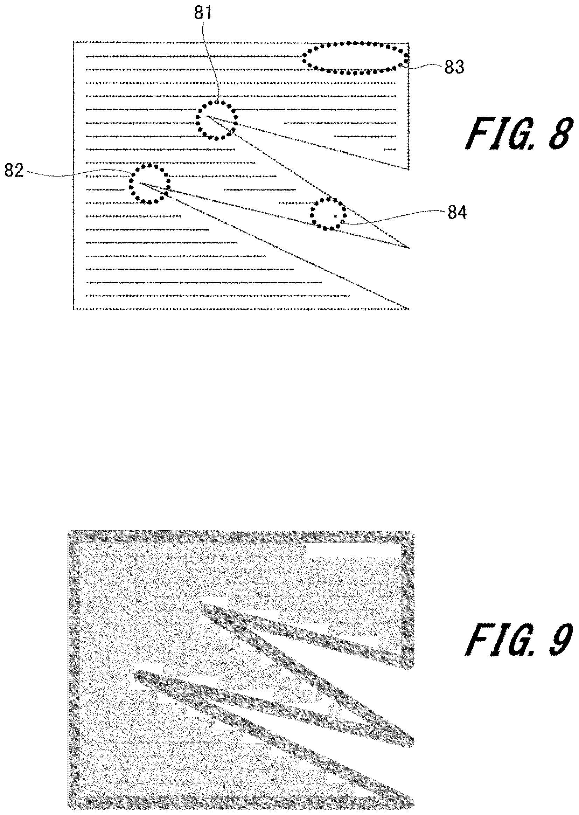

Here, an example of visually representing a scanning path of an energy beam in a related art will be described with reference to FIGS. 8 and 9.

FIG. 8 is a diagram illustrating an example (part 1) visually representing the scanning path of the energy beam in a related art.

FIG. 9 is a diagram illustrating an example (part 2) visually representing the scanning path of the energy beam in a related art.

When excess or deficiency occurs in the cumulative energy density distribution in the manufactured surface, the melting target region (for example, a cross section of the manufactured object) of the powder layer is not favorably melted. An example of the region where such a phenomenon is likely to occur is, for example, a region along a line connecting end points of adjacent scanning lines in the case of raster scanning with an energy beam. In this region, the envelope of the cumulative energy density distribution has a jagged shape (step shape), and the cumulative energy density decreases in a minute region corresponding to the dent, so that the possibility of generating a defect of the unmelted powder due to insufficient melting of the powder increases.

As another example, for example, in the case of performing annual ring-shaped vector scanning in accordance with the shape of the melting target region by the energy beam, the energy beam is likely to occur in a region where a specific condition is satisfied. For example, depending on the combination of the shape of the melting target region, the distance between the adjacent scanning lines, and the positional relationship, there may be a portion where the interval between the scanning lines becomes dense or a region where the interval becomes sparse, and in such a region, the cumulative energy density becomes excessive or insufficient. This increases the possibility of occurrence of defects due to insufficient melting or excessive melting of the powder in the melting target region.

In the related art, the beam scanning path is visually checked by a line as illustrated in FIG. 8, or checked by a line having a thickness reflecting the beam diameter as illustrated in FIG. 9. In FIGS. 8 and 9, examples of a scanning line corresponding to a contour line of an octagonal cross-sectional shape and a plurality of parallel line-shaped scanning lines in the contour line are displayed. In FIG. 8, broken line portions 81 and 82 are regions where the cumulative energy density may be too high, and broken line portions 83 and 84 are regions where the cumulative energy density may be too low.

However, in these display methods of the related art, superposition of irradiation energy density distributions from adjacent scanning lines cannot be expressed. Therefore, when the manufactured surface is scanned with the energy beam, whether or not the accumulated irradiation energy density falls within a proper range in order to manufacture a non-defective manufactured object in every minute region cannot be checked.

Therefore, the operator cannot check whether or not the beam scanning path and the beam scanning conditions are optimally designed for performing good manufacturing before manufacturing. As a result, there is a possibility that the manufacturing is performed while the design of the beam scanning path and the beam scanning condition is inappropriate. As a result, there is a concern that a defective product is manufactured, the yield is deteriorated, and the production efficiency is lowered.

For the same reason, when a defect is found in the manufactured object by inspection after the manufacturing is performed, it is difficult to determine or identify whether the cause is the design of the energy beam scanning path or another cause. For example, other causes include failure of the beam irradiation device 14 of the three-dimensional PBF-AM apparatus and other mechanical operations, failure of the material powder, and the like. Therefore, in order to solve these problems, the present invention has a configuration for visually displaying the cumulative energy density distribution of each layer.

### [Display Screen Showing Cumulative Energy Density Distribution]

Next, an example of a display screen representing the cumulative energy density distribution according to the first embodiment of the present invention will be described with reference to FIG. 10.

FIG. 10 is a diagram illustrating an example of a display screen representing a cumulative energy density distribution by the build data generating device 30.

In FIG. 10, the display screen 100 (an example of a user interface) includes a cumulative energy density distribution display region 101, a layer number display region 102, and an update button 103. The cumulative energy density distribution displayed on the display screen 100 is based on the build data generated by the build data generating unit 302 (FIG. 4) and read by the display control unit 305. In a case where the storage unit 60b has build data for a plurality of pieces of three-dimensional shape data, the operator may be able to designate the three-dimensional shape data (build data) by the input device 41.

A layer number display field 102a is prepared in the layer number display region 102 (an example of a designation function). The operator can check which layer the currently displayed cumulative energy density distribution belongs to by the layer number displayed in the layer number display field 102a. The layer number display field 102a is also a field for designating a layer number desired to be displayed by the operator. The operator can operate the input device 41 to input the layer number to be displayed in the layer number display field 102a. After the operator inputs the layer number, the display control unit 305 updates the display by pressing the update button 103.

The cumulative energy density distribution display region 101 (an example of a display function) displays the cumulative energy density distribution for the designated layer of the three-dimensional shape data. The cumulative energy density distribution is displayed in a gray scale, a hue, or an arbitrary color map according to the value of the cumulative energy density. For example, in the descending order of the cumulative energy density, the colors are set in a stepwise manner by setting specific threshold values such as red, orange, yellow, yellowish green, green, blue, purple, and black. As a result, the operator can check the uniformity of the cumulative irradiation energy density distribution in the designated layer.

In the example illustrated in FIG. 10, the cumulative energy density distribution of the build data of the 301st layer is displayed in the cumulative energy density distribution display region 101. The cross-sectional shape according to the build data of the 301st layer has an octagonal beam scanning path (contour line). The build data of the 301st layer includes a scanning line corresponding to the contour line of the cross-sectional shape and a plurality of parallel scanning lines in the contour line. In the cumulative energy density distribution of the 301st layer, the positions of the broken line portions 105 and 106 correspond to the positions of the broken line portions 81 and 82 illustrated in FIG. 8. The positions of the broken line portions 107 and 108 correspond to the positions of the broken line portions 83 and 84 illustrated in FIG. 8.

A portion surrounded by the broken line portions 105 and 106 and a portion surrounded by the broken line portions 107 and 108 look similar in the gray scale in FIG. 10, but are displayed in different colors on the actual display screen.

The portion surrounded by a broken line portions 105 and 106 is a color (for example, red) indicating that the cumulative energy density is high, and the portion surrounded by broken line portions 107 and 108 is a color (for example, dark blue) indicating that the cumulative energy density is low. That is, it can be seen that the region surrounded by the broken line portions 105 and 106 is a region where the cumulative energy density may be too high (hereinafter, the region is referred to as a "cumulative energy density excess region"). Similarly, it can be seen that a region surrounded by the broken line portions 107 and 108 is a region where the cumulative energy density may be too low (hereinafter, the region is referred to as a "cumulative energy density insufficient region").

In the first embodiment described above, it is possible to visually grasp the cumulative irradiation energy density distribution on the manufactured surface when the energy beam is scanned along the planned beam scanning path. In the cumulative irradiation energy density distribution in the manufactured surface, for example, an energy density distribution of a beam cross section, a scanning speed, a scanning interval, and a beam scanning path are reflected as manufacturing conditions (beam scanning conditions, beam irradiation conditions).

Excess or deficiency of the cumulative energy density (non-uniformity of the cumulative energy density distribution) in the manufactured surface due to the unevenness of the density of the beam scanning path is one of the causes of the occurrence of the defect due to the excessive melting or the melting defect. Therefore, it is desirable to detect (visually grasp) the presence of a minute region where the cumulative energy density in the manufactured surface is excessive or insufficient on the CAM software by utilizing the build data generating device 30 according to the present embodiment. Based on the detection result, by designing the manufacturing condition for preventing the occurrence of the defect and manufacturing the non-defective product, it is possible to contribute to a decrease in the yield of the manufactured object and an improvement in the manufacturing efficiency.

### <Second Embodiment>

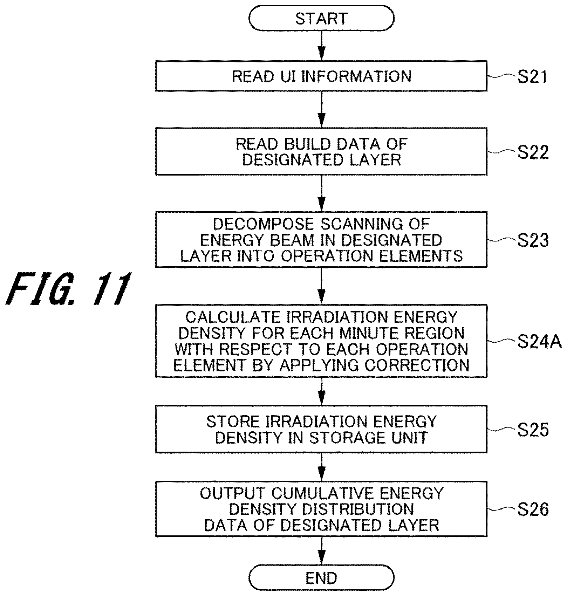

A build data generating device according to the second embodiment of the present invention will be described with reference to FIGS. 11 to 15. The basic configuration of the build data generating devices according to the second embodiment is the same as the configuration of the build data generating device 30 (FIGS. 4 to 6) according to the first embodiment.

In the second embodiment, the cumulative energy density distribution in the manufactured surface is displayed by applying the correction control applied in the actual manufacturing regarding the energy density, the scanning speed, and the like of the energy beam reflecting the arrangement and the three-dimensional shape of the manufactured object to the calculation of the beam energy. That is, the cumulative energy density distribution in the manufactured surface is displayed after applying the correction to the manufacturing condition of the build data. The display screen is provided with a user interface capable of selecting whether or not to apply various corrections for each correction type. The user interface is, for example, a switch that can select on/off of correction.

FIG. 11 is a flowchart illustrating an example of a process of displaying a cumulative energy density distribution by the build data generating device according to the second embodiment of the present invention.

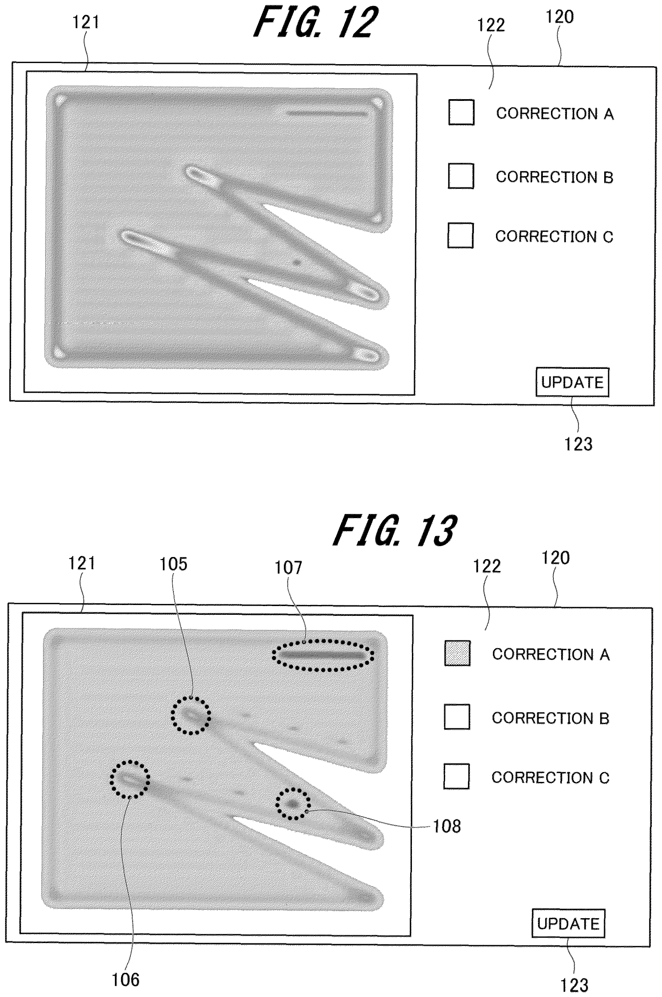

The flowchart of FIG. 11 is greatly different from the flowchart of FIG. 7 in the first embodiment in that step S24A of applying correction to the manufacturing condition to calculate the irradiation energy density is included. The operation of this flowchart is realized by the processor 60a (FIG. 6) reading and executing a program written in the storage unit 60b. The storage unit 60b stores a program for calculating various corrections necessary for reproducing various corrections of manufacturing conditions performed by the three-dimensional PBF-AM apparatus 10. Hereinafter, the flowchart of FIG. 11 will be described focusing on differences from FIG. 7, and redundant description will be omitted. This flowchart starts processing when the operator presses an instruction button of "update" (see FIG. 12) on the display screen.

First, the display control unit 305 (FIG. 4) reads the UI information (step S21), reads the build data of the designated layer (step S22), and decomposes the energy beam scanning in the designated layer into operation elements (step S23).

Next, in the display control unit 305, the irradiation energy density calculation unit 503 calculates the irradiation energy density 510 for each minute region corresponding to each of the display pixels at the designated display magnification based on the manufacturing condition for all the operation elements (step S24A).

In step S24A, the reading unit 501 receives the correction type selected in the correction information display region 122 (see FIGS. 12 to 15 described later) as the UI information. The irradiation energy density calculation unit 503 applies the correction information sent from the reading unit 501 to the manufacturing condition of each operation element, and calculates the irradiation energy density 510 for each minute region corresponding to each of all the display pixels based on the corrected manufacturing condition.

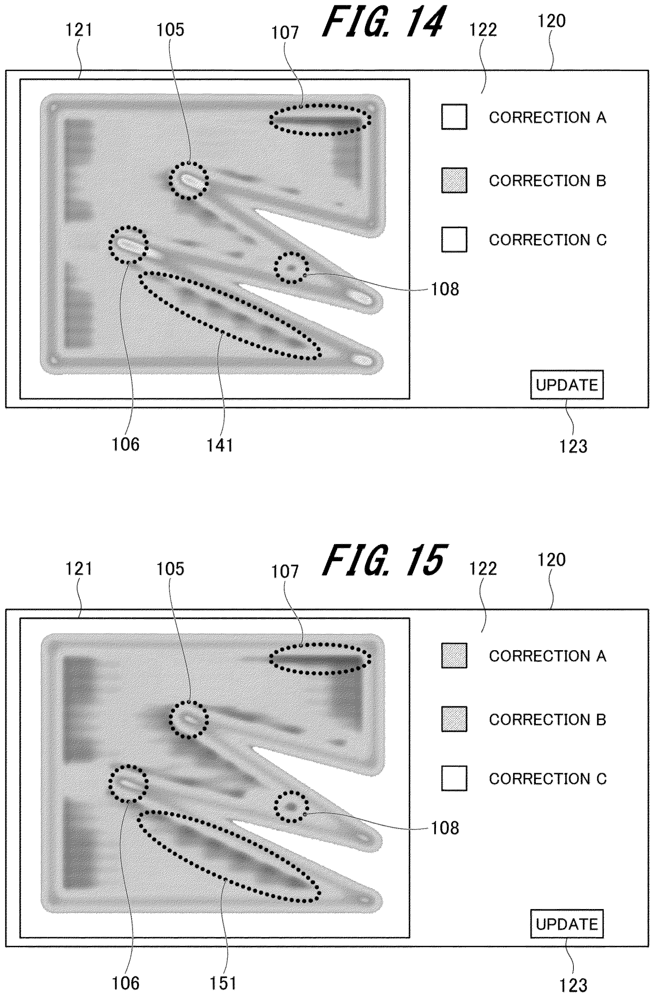

As an example, when the layer immediately below the beam irradiation path is an unmelted powder bed in order to compensate for the variation in the degree of diffusion of thermal energy to the stacked lower layer of the powder bed, the various corrections include a correction of locally increasing the scanning speed of the corresponding portion (correction A in FIG. 13). Furthermore, as another example, there is a correction to locally increase the scanning speed at such a place in order to alleviate the partial concentration of thermal energy due to the influence of the diffusion of heat from the adjacent scanning lines in a case where the vicinity is scanned without much time from the scanning of the adjacent scanning lines (correction B in FIG. 14). The contents of various corrections are not limited to these two examples.

Then, the irradiation energy density calculation unit 503 stores the irradiation energy density 510 (FIG. 5) of each minute region calculated for each operation element in the storage region secured for each minute region of the storage unit 60b (step S25).

Next, the display data generation unit 504 generates cumulative energy density distribution data (display data) of the designated layer from the irradiation energy density 510 for each minute region of the designated layer stored in the storage unit 60b, and outputs the data to the display device 42 (step S26). As a result, the cumulative energy density distribution reflecting the correction for the pixels to be displayed in the layer designated by the operator is graphically displayed on the display device 42.

The cumulative energy density distribution to which the correction is applied of the designated layer is graphically displayed by the operation of the build data generating device (display control unit 305) described above.

### [Display Screen Showing Correction Information and Cumulative Energy Density Distribution]

Next, an example of a display screen representing the correction information and the cumulative energy density distribution according to the second embodiment of the present invention will be described with reference to FIGS. 12 to 15. FIGS. 12 to 15 have a screen configuration in which the operator can check the difference in the cumulative energy density distribution depending on the presence or absence of the correction.

FIG. 12 is a diagram illustrating an example of a display screen representing the cumulative energy density distribution including the correction information (without correction).

In FIG. 12, the display screen 120 (an example of a user interface) includes a cumulative energy density distribution display region 121, a correction information display region 122, and an update button 123. As an example, a user interface (not illustrated) for checking with the operator whether to shift to the correction application mode is displayed on the display screen 100 illustrated in FIG. 10. Then, when the shift to the correction application mode is selected, the display data generation unit 504 displays the display screen 120.

In the correction information display region 122 (an example of a selection function), selectable correction types and check boxes for selecting validity or invalidity for each correction type are displayed. The displayed correction type is correction that can be executed by the three-dimensional PBF-AM apparatus 10, but inexecutable correction may be displayed in gray.

In the example of FIG. 12, the correction A, the correction B, and the correction C are prepared as the correction candidates, but the validity of any of the corrections A to C is not selected. In the present embodiment, the target correction is selected by displaying the check boxes in a filled manner, but a specification to input a check mark may be used. In addition, it may be a numerical value input field for designating a weight of application of correction. After the operator inputs the correction information, the display control unit 305 updates the display by pressing the update button 123.

The cumulative energy density distribution display region 121 (an example of a display function) displays the cumulative energy density distribution for the designated layer of the three-dimensional shape data reflecting the correction information of the correction information display region 122. The cumulative energy density distribution of the layer designated in the layer number display field 102a in the first embodiment is displayed in the cumulative energy density distribution display region 121. The example of FIG. 12 is a cumulative energy density distribution to which no correction is applied, and is the same as the cumulative energy density distribution of the 301st layer illustrated in FIG. 10.

FIG. 13 is a diagram illustrating an example of a display screen representing the cumulative energy density distribution including the correction information (with a first correction).

On the display screen 120 shown in FIG. 13, the cumulative energy density distribution when the correction A (example of the first correction) is applied to the manufacturing condition is displayed in the cumulative energy density distribution display region 121.

In the cumulative energy density distribution, the positions of the broken line portions 105, 106, 107, and 108 corresponds to the positions of the broken line portions 105, 106, 107, and 108 illustrated in FIG. 10. It can be seen that the portion surrounded by the broken line portions 105 and 106 that was the cumulative energy density excess region without correction changed from red to yellowish green or green by applying the correction A, and the cumulative energy density decreased. In addition, it can be seen that the portion surrounded by the broken line portions 107 and 108 that was the cumulative energy density insufficient region without correction did not change from dark blue, but the area of the dark blue portion was enlarged, and the cumulative energy density further decreased. Although it is difficult to understand in FIG. 13, the cumulative energy density decreases in the entire manufactured surface (scanning line along contour line, scanning line in contour line) by applying the correction A.

FIG. 14 is a diagram illustrating an example of a display screen representing the cumulative energy density distribution including the correction information (with a second correction).

On the display screen 120 shown in FIG. 14, the cumulative energy density distribution when the correction B (example of the second correction) is applied to the manufacturing condition is displayed in the cumulative energy density distribution display region 121.

It can be seen that the portion surrounded by the broken line portions 105 and 106 that was the cumulative energy density excess region without correction changed from red to orange or yellow by applying the correction B, and the cumulative energy density decreased. In addition, it can be seen that the area of the dark blue portion surrounded by the broken line portions 107 and 108 that was the cumulative energy density insufficient region without correction and the area of the dark blue portion below the dark blue portion are enlarged, and the cumulative energy density is further decreased. By applying the correction B, the cumulative energy density decreases as a whole in the contour line of the octagonal cross-sectional shape. For example, a decrease in cumulative energy density is newly observed in the broken line portion 141 located inside the contour line in the oblique direction, the left side of the cross-sectional shape, and the like.

FIG. 15 is a diagram illustrating an example of a display screen representing the cumulative energy density distribution including the correction information (with the first and second corrections).

On a display screen 120 illustrated in FIG. 15, the correction A and the correction B are simultaneously selected. The cumulative energy density distribution when the correction A and the correction B (example of the first and second corrections) are applied to the manufacturing condition is displayed in the cumulative energy density distribution display region 121. In the cumulative energy density distribution, the position of the broken line portion 151 corresponds to the position of the broken line portion 141 illustrated in FIG. 14.

The portion surrounded by the broken line portions 105 and 106 that was the cumulative energy density excess region without correction changed from red to orange or yellow by applying the corrections A and B. By applying the corrections A and B, the operator can visually recognize that the color of the region of interest has changed from red to the same color as in the case of only the correction A or a slightly yellowish color, and can check that the cumulative energy density has decreased. In this case, it can be seen that, by applying the corrections A and B, the cumulative energy density decreases lower than that in the case without the correction, but the cumulative energy density is higher than that in the case of only the correction A.

In addition, it can be seen that, by applying the corrections A and B, the area of the dark blue portion surrounded by the broken line portions 107 and 108 that was the cumulative energy density insufficient region without correction is clearly enlarged, and the cumulative energy density is further decreased as compared with the case of only the correction B. However, it is considered that there is no large difference in the overall cumulative energy density distribution in the contour line of the octagonal cross-sectional shape between the case of applying the correction B and the case of applying the corrections A and B.

In the second embodiment described above, it is possible to visually grasp the cumulative irradiation energy density distribution on the manufactured surface when the energy beam is scanned along the planned beam scanning path by applying the correction of the manufacturing condition. In the cumulative irradiation energy density distribution in the manufactured surface, for example, an energy density distribution of a beam cross section, a scanning speed, a scanning interval, and a beam scanning path are reflected as manufacturing conditions (beam scanning conditions, beam irradiation conditions).

In addition, excess or deficiency of the cumulative energy density (non-uniformity of the cumulative energy density distribution) in the manufactured surface due to the appropriateness or inappropriateness of correction of the manufacturing condition is one of the causes of the occurrence of the defect due to the excessive melting or the melting defect. Therefore, it is desirable to detect an excess or deficiency of the cumulative energy density in the manufactured surface on the CAM software by utilizing the build data generating device according to the present embodiment. Based on the detection result, by designing the manufacturing condition for preventing the occurrence of the defect and manufacturing the non-defective product, it is possible to contribute to a decrease in the yield of the manufactured object and an improvement in the manufacturing efficiency.

### <Third Embodiment>

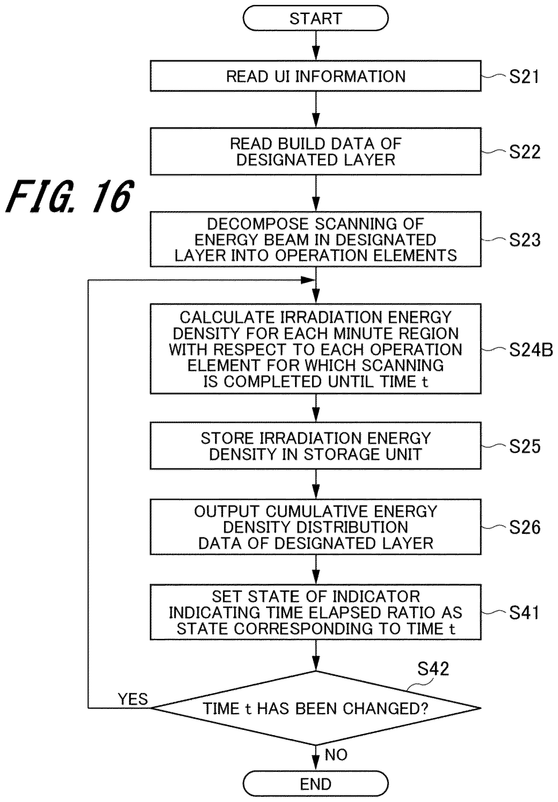

A build data generating device according to the third embodiment of the present invention will be described with reference to FIGS. 16 to 18. The basic configuration of the build data generating devices according to the third embodiment is the same as the configuration of the build data generating device 30 (FIGS. 4 to 6) according to the first embodiment.

The build data generating device according to the third embodiment is an example of displaying the temporal change of the cumulative energy density distribution in the manufactured surface according to the order of energy beam scanning. The display screen is provided with a user interface having a function of indicating a time elapsed ratio during manufacturing of one layer (for example, a progress bar), a function of freely changing an elapsed time from start of beam scanning back and forth, and a function of operating on/off of automatic reproduction.

FIG. 16 is a flowchart illustrating an example of a process of displaying a cumulative energy density distribution by the build data generating device according to the third embodiment of the present invention.

The flowchart of FIG. 16 is largely different from the flowchart of FIG. 7 in the first embodiment in that step S24B of calculating the irradiation energy density in consideration of the elapsed time from the start of the beam scanning, step S41 of displaying the elapsed time by the progress bar, and step S42 of checking the presence or absence of the time change are included. The operation of this flowchart is realized by the processor 60a (FIG. 6) reading and executing a program written in the storage unit 60b. Hereinafter, the flowchart of FIG. 16 will be described focusing on differences from FIG. 7, and redundant description will be omitted. This flowchart starts when the operator changes the elapsed time from the start of beam scanning on the screen or performs an operation to switch on automatic reproduction.

First, the display control unit 305 (FIG. 4) reads the UI information (step S21), reads the build data of the designated layer (step S22), and decomposes the energy beam scanning in the designated layer into operation elements (step S23).

Next, in the display control unit 305, the irradiation energy density calculation unit 503 calculates the irradiation energy density 510 for each minute region corresponding to each of all display pixels at the designated display magnification based on the manufacturing condition for each operation element for which the beam scanning of the designated layer is completed during the time t from the start of the beam scanning (step S24B).

In step S24B, the time at the start of powder bed fusion additive manufacturing for the layer to be displayed is set to 0, and the elapsed time from the time 0 is set to t. An initial value of t is set to 0.

Then, the irradiation energy density calculation unit 503 stores the irradiation energy density 510 (FIG. 5) of each minute region calculated for each operation element in the storage region secured for each minute region of the storage unit 60b (step S25).

Next, the display data generation unit 504 generates cumulative energy density distribution data (display data) of the designated layer from time 0 to time t, from the irradiation energy density 510 for each minute region from time 0 to time t of the designated layer stored in the storage unit 60b, and outputs the data to the display device 42 (step S26). As a result, the cumulative energy density distribution in the layer designated by the operator up to the time t corresponding to the pixels to be displayed is graphically displayed on the display device 42.

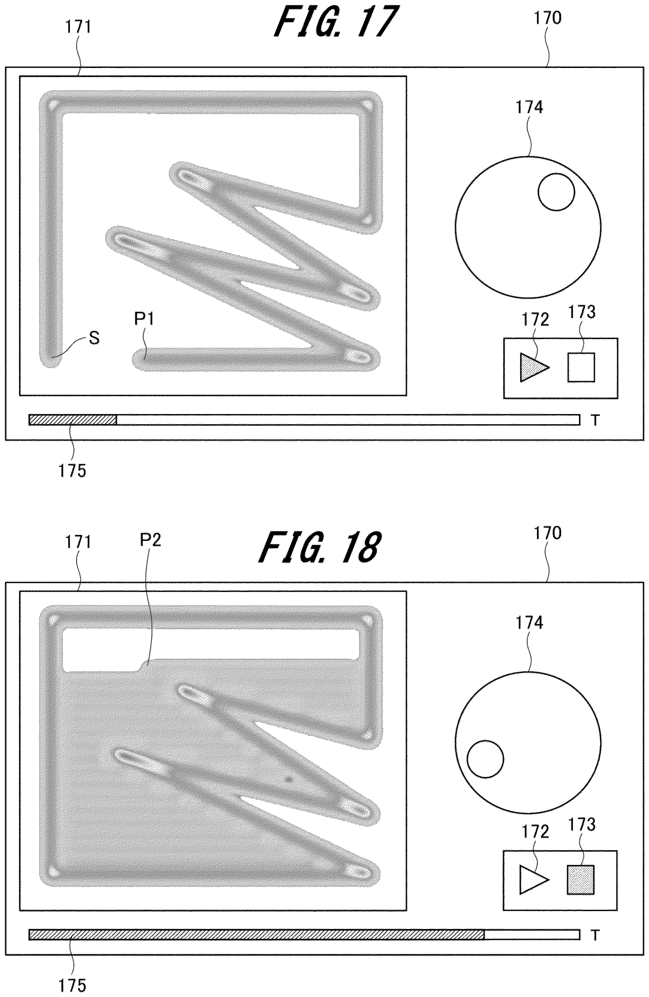

Here, the display data generation unit 504 sets a progress bar 175 (see FIG. 17 to be described later) indicating a time elapsed ratio with respect to a time T (see FIG. 17) required to complete beam scanning included in the display data to a state corresponding to the time t (step S41). For example, the length of the progress bar 175 (rod-shaped object) is displayed at a position corresponding to the time t. The process of step S41 may be performed in parallel with step S26 or may be included in the process of step S26.

Next, the irradiation energy density calculation unit 503 determines whether or not the time t has been changed (step S42), and when the time t has been changed (YES determination in step S42), the process returns to step S24B. Then, the irradiation energy density calculation unit 503 calculates the irradiation energy density 510 for each minute region for each operation element for which the beam scanning is completed until the time t based on the changed time t. The display control unit 305 repeats the processes of steps S24B to S41 until the time at which the beam scanning of all the layers to be displayed is completed (elapse of time T).

For example, during automatic reproduction to be described later, the irradiation energy density calculation unit 503 increases the time t by an arbitrary constant increment (Δt). The irradiation energy density calculation unit 503 calculates the irradiation energy density 510 for each minute region with respect to each operation element for which the beam scanning is completed between the time 0 and the changed time (t + Δt).

For example, when the operator operates a jog dial 174 (see FIG. 17) to change the time, the irradiation energy density calculation unit 503 returns to step S24B regardless of whether or not the automatic reproduction is in progress. The irradiation energy density calculation unit 503 increases or decreases the value at the time t by an amount corresponding to the operation amount (rotation angle) of the jog dial 174, and executes the process of step S24B.

In a case where the time t is not changed in step S42 (NO determination in step S42), the processing is ended.

The cumulative energy density distribution of the designated layer at the time t after the start of the beam scanning is graphically displayed by the operation of the build data generating device (display control unit 305) described above.

### [Display Screen Showing Cumulative Energy Density Distribution Reflecting Time Change]

Next, an example of a display screen representing the temporal change of the cumulative energy density distribution according to the third embodiment of the present invention will be described with reference to FIGS. 17 and 18.

FIG. 17 is a diagram (part 1) illustrating an example of a display screen representing a cumulative energy density distribution in a middle stage of energy beam scanning in a certain layer.

In FIG. 17, a display screen 170 (an example of a user interface) includes a cumulative energy density distribution display region 171, an automatic reproduction button 172, a stop button 173, a jog dial 174, and a progress bar 175. As an example, a user interface (not illustrated) for checking with the operator whether to shift to the temporal change mode is displayed on the display screen 100 illustrated in FIG. 10. Then, when the shift to the temporal change mode is selected, the display data generation unit 504 displays the display screen 170 illustrated in FIG. 17.

The cumulative energy density distribution display region 171 (an example of a display function) displays the cumulative energy density distribution for the designated layer of the three-dimensional shape data. The types of display include display by automatic reproduction and display by time designation.

In the case of display by automatic reproduction, the distribution of the irradiation energy density is displayed as a moving image according to the order of beam scanning. As a result, the temporal change of the cumulative energy density distribution can be visually checked.

In the case of display by time designation, the cumulative energy density distribution from the time 0 to the time t at the designated time t is displayed. As a result, the cumulative energy density distribution at the time of interest can be visually checked.

FIG. 17 and FIG. 18 described later illustrate, as an example, a display state in the middle stage of the energy beam scanning of one layer in the same layer (for example, the 301st layer) as in FIG. 10. The example of FIG. 17 illustrates a stage where the beam scanning is started from a position S, the beam scanning along the contour line (vector scanning) is performed, and a position P1 is reached.

The automatic reproduction button 172 (an example of a selection function) is a button used for automatic reproduction of the cumulative energy density distribution. The operator can select execution or non-execution of the automatic reproduction by using the automatic reproduction button 172. When the operator presses the automatic reproduction button 172, the display control unit 305 automatically reproduces the cumulative energy density distribution as a moving image according to the beam scanning order.

During the automatic reproduction, the automatic reproduction button 172 is turned on or highlighted so that it can be visually recognized that the automatic reproduction is in progress. The display screen 170 illustrated in FIG. 17 is a display example of the cumulative energy density distribution by the automatic reproduction. Whether or not to automatically reproduce at the time of displaying this screen may be set in advance. The display screen 170 according to the present embodiment is a user interface with which the operator can select the display by automatic reproduction or time designation.

The stop button 173 is a button for stopping the automatic reproduction of the cumulative energy density distribution. When the operator presses the stop button 173, the display control unit 305 stops the automatic reproduction of the cumulative energy density distribution. While the automatic reproduction is stopped, the stop button 173 is turned on or highlighted so that it can be visually recognized that the automatic reproduction is stopped. In this state, when the stop button 173 is pressed again, the light or the highlighted display disappears, and the automatic reproduction is restarted or the automatic reproduction is enabled from that time.

The jog dial 174 (an example of a time change function) is a rotation operation unit that can freely move an elapsed time (time t) from the start of beam scanning in the display of the cumulative energy density distribution. The cumulative energy density distribution display region 171 displays the distribution of the cumulative energy density of the designated layer in the elapsed time when the jog dial 174 is operated. When the jog dial 174 rotates clockwise, time t at which the cumulative energy density distribution is displayed advances according to the operation amount (rotation angle). When the jog dial 174 rotates counterclockwise, time t at which the cumulative energy density distribution is displayed returns according to the operation amount (rotation angle). Although the rotation operation unit is used for the time change function, for example, a linear slider may be used.

The progress bar 175 (an example of a time elapsed ratio display function) indicates a time elapsed ratio with respect to the time required from the start to the completion of beam scanning of the designated layer. The length of the rod-shaped object indicated by hatching of the progress bar 175 is displayed at a position corresponding to the time t. A time (hereinafter, referred to as a "beam scanning time") required from the start of beam scanning to the completion of beam scanning in the designated layer is assumed to be T. From the position of the time t with respect to the beam scanning time T, the time elapsed ratio with respect to the beam scanning time T can be known. For example, the operator can intuitively grasp how much the beam scanning has proceeded with respect to the manufactured surface or how much time is left until the completion of the beam scanning. Note that the progress bar 175 is a rod-shaped object having a variable length, but may have a circle, another shape, or a display form.

FIG. 18 is a diagram (part 2) illustrating an example of a display screen representing a cumulative energy density distribution in a middle stage of energy beam scanning.

The display screen 170 illustrated in FIG. 18 is a display example of the cumulative energy density distribution by time designation, and illustrates a stage in which the inside of the contour line is raster-scanned left and right. A position P2 is an irradiation position of the electron beam 15 at the time t designated by the jog dial 174. Since the raster scanning is being performed on the inner side of the contour line, the progress bar 175 indicates that the time t is approaching the beam scanning time T. In this manner, the operator can freely designate a target time with respect to the manufactured surface and check the cumulative energy density distribution at any time.

In the second embodiment described above, it is possible to visually grasp the temporal change according to the scanning order of the cumulative irradiation energy density distribution on the manufactured surface when the energy beam is scanned along the planned beam scanning path. In the cumulative irradiation energy density distribution in the manufactured surface, for example, an energy density distribution of a beam cross section, a scanning speed, a scanning interval, and a beam scanning path are reflected as manufacturing conditions (beam scanning conditions, beam irradiation conditions).

As described above, the excess or deficiency of the cumulative energy density (non-uniformity of the cumulative energy density distribution) in the manufactured surface is one of the causes of the occurrence of the defect due to the excessive melting or the melting defect. Here, when the cumulative energy density distribution and the diffusion of heat in a microscopic and minute time are considered together, more accurate quality evaluation may be possible.

For example, even if there is a minute region where the cumulative energy density is high, the instantaneous maximum energy density does not become so high in a case where the minute region is the cumulative value of the irradiation energy density by the beam scanning in the vicinity at a sufficiently long time. Therefore, it can be determined that the possibility of occurrence of defects due to excessive melting is not high. Therefore, by utilizing the build data generating device according to the present embodiment and applying the build data generating device according to the present embodiment to the first embodiment, the effect of the first embodiment can be further enhanced. For the same reason, even when the build data generating device according to the present embodiment is applied to the second embodiment, the effect of the second embodiment can be further enhanced.

### <Modification>

As described above, the present invention is not limited to the above-described embodiments, and it is needless to say that various other modifications and application examples can be taken without departing from the gist of the invention described in the claims.

For example, in the above embodiment, the manufacturing condition includes the beam scanning condition and the beam irradiation condition, but the present invention is not limited thereto, and the manufacturing condition may include at least one of the beam scanning condition and the beam irradiation condition. This also applies to the correction of the manufacturing condition.

In the above embodiment, the beam scanning conditions include the beam scanning method, the distance between the adjacent scanning lines, and the scanning speed, but the present invention is not limited thereto, and the beam scanning conditions may include at least one of the beam scanning method, the distance between the adjacent scanning lines, and the scanning speed.

Further, in the above embodiment, the beam irradiation condition includes the beam current amount or the beam intensity, and the beam size in the manufactured surface, but the present invention is not limited thereto, and the beam irradiation condition may include at least one of the beam current amount, the beam intensity, and the beam size in the manufactured surface.

### Reference Signs List

1 three-dimensional powder bed fusion additive manufacturing (PBF-AM) system
10 three-dimensional powder bed fusion additive manufacturing (PBF-AM) apparatus
14 beam irradiation device
15 electron beam
16 powder application device
26 plate moving device
30 build data generating device
32 metal powder
38 manufactured object
41 input device
42 display device
100 display screen
101 cumulative energy density distribution display region
102 layer number display region
102a layer number display field
120 display screen
121 cumulative energy density distribution display region
122 correction information display region
170 display screen
171 cumulative energy density distribution display region
172 automatic reproduction button
173 stop button
174 jog dial
175 progress bar
305 display control unit
501 reading unit
502 operation element decomposition unit
503 irradiation energy density calculation unit
504 display data generation unit

## Claims

1. A build data generating device that generates build data (304) for controlling a three-dimensional powder bed fusion additive manufacturing apparatus (10) that manufactures an article by melting a cross-sectional shape of each layer by irradiation of a beam, the build data generating device comprising:
a display control unit (305) that generates data indicating a distribution of an irradiation energy density accumulated in a target layer by beam scanning for the target layer based on the build data (304) and outputs the data to a display device (42).

2. The build data generating device according to claim 1, wherein
the display control unit (305) generates the data indicating the distribution of the irradiation energy density accumulated in the target layer by using a layer designated by an operator as the target layer.

3. The build data generating device according to claim 2, wherein
the display control unit (305) includes
a user interface (100) having:
a designation function (102) of receiving designation of the target layer by the operator; and
a display function (101) of displaying the distribution of the irradiation energy density accumulated in a designated layer.

4. The build data generating device according to claim 1, wherein
the display control unit (305) applies correction selected by the operator to the build data (304), and generates the data indicating the distribution of the irradiation energy density accumulated in the target layer by beam scanning with respect to the target layer based on the build data (304) after correction.

5. The build data generating device according to claim 4, wherein
the display control unit (305) includes
a user interface (120) having:
a selection function (122) of receiving selection of the correction by the operator; and
a display function (121) of displaying a distribution of the irradiation energy density accumulated in the target layer based on the build data (304) to which the selected correction is applied.

6. The build data generating device according to claim 5, wherein
the selection function (122) of receiving selection of the correction by the operator is a function of allowing the operator to select validity or invalidity for each correction type.

7. The build data generating device according to claim 1, wherein
the display control unit (305) generates data indicating a temporal change in the distribution of the irradiation energy density accumulated in the target layer according to the order of beam scanning.

8. The build data generating device according to claim 7, wherein
the display control unit (305) includes
a user interface (170) having:
a selection function (172) of allowing an operator to select between execution and non-execution of display of the distribution of the irradiation energy density accumulated in the target layer in a moving image according to an order of beam scanning; and
a display function (171) of displaying the distribution of the irradiation energy density accumulated in the target layer, and
in a case where the execution of display in the moving image according to the order of the beam scanning is selected in the selection function (172), the display function (171) displays the distribution of the irradiation energy density accumulated in the target layer in the moving image according to the order of the beam scanning.

9. The build data generating device according to claim 7, wherein
the display control unit (305) includes
a user interface (170) having:
a time change function (174) of operating an elapsed time from the start of the beam scanning in the display of the distribution of accumulated irradiation energy density; and
a display function (171) of displaying the distribution of the irradiation energy density accumulated in the target layer, and
the display function (171) displays the distribution of the irradiation energy density accumulated in the target layer at the elapsed time operated by the time change function (174) .

10. The build data generating device according to claim 8 or 9, wherein
the user interface (170) further has a time elapsed ratio display function (175) of indicating a time elapsed ratio of the elapsed time with respect to a time required from start to completion of beam scanning in the target layer.

11. The build data generating device according to claim 1, wherein
the build data (304) includes, as manufacturing conditions, information of an energy density distribution of a beam cross-section in the target layer, a scanning speed, a scanning interval, and a beam scanning path.

12. A three-dimensional powder bed fusion additive manufacturing system comprising: a three-dimensional powder bed fusion additive manufacturing apparatus (10) that manufactures an article by melting a cross-sectional shape of each layer by irradiation of a beam; and a build data generating device (30) that generates build data (304) for controlling the three-dimensional powder bed fusion additive manufacturing apparatus (10), wherein
the build data generating device (30) includes:
a display control unit (305) that generates data indicating a distribution of an irradiation energy density accumulated in a target layer by beam scanning for the target layer based on the build data (304) and outputs the data to a display device (42).

13. A cumulative energy density distribution display method by a build data generating device (30) that generates build data (304) for controlling a three-dimensional powder bed fusion additive manufacturing apparatus (10) that manufactures an article by melting a cross-sectional shape of each layer by irradiation of a beam, the cumulative energy density distribution display method comprising:
processing of calculating an irradiation energy density accumulated in a target layer by beam scanning for the target layer based on the build data (304); and
processing of generating data indicating a distribution of the irradiation energy density accumulated in the target layer and outputting the data to a display device (42).
